# FASCICULE DE BREVET EUROPEEN

(11) **EP 2 264 317 B1**
(45) Date de publication et mention de la délivrance du brevet: **26.10.2011**
(21) Numéro de dépôt: 10164158.7
(22) Date de dépôt: 27.05.2010
(51) Int. Cl.: F04C 2/14, F04C 13/00, B64G 1/50

(54) **Procédé et dispositif d'échange thermique diphasique à pompe à engrenages sur roulements**
Verfahren und Vorrichtung zum Zweiphasen-Wärmeaustausch mit Hilfe einer Zahnradpumpe auf Rollenlagern
Two-phase heat-exchange method and device with bearing-mounted gear pump

(30) Priorité: 28.05.2009 FR 0902583
(43) Date de publication de la demande: 22.12.2010
(73) Titulaire: Centre National d'Etudes Spatiales (C.N.E.S.), 75039 Paris Cedex 01 (FR)
(72) Inventeur: Casteras, Christophe, 31400 Toulouse (FR); Coste, Xavier, 31830 Plaisance du Touch (FR); Larue de Tournemine, Amaury, 31120 Goyrans (FR)
(74) Mandataire: Cabinet BARRE LAFORGUE & associés

(56) Documents cités:
- WO-A1-92/15774
- FR-A1- 2 824 366
- FR-A1- 2 919 687
- GB-A- 249 960

## Description

L'invention concerne un procédé et un dispositif d'échange thermique du type diphasique, c'est-à-dire comprenant un fluide caloporteur susceptible de se présenter au moins partiellement à l'état liquide et au moins partiellement à l'état vapeur.

On a déjà proposé des procédés et des dispositifs d'échange thermique de ce type, comprenant des moyens de pompage du fluide caloporteur pour l'entraîner en déplacement dans un circuit comprenant des moyens d'échange thermique avec au moins une source froide et au moins une source chaude externes à ce circuit, ledit fluide caloporteur changeant au moins partiellement d'état au contact d'au moins une partie desdits moyens d'échange thermique. Le circuit étant en général en forme de boucle (le fluide caloporteur continûment dans un réseau hydraulique fermé), on parle de « boucle diphasique ».

Une telle boucle diphasique présente en théorie de nombreux avantages, notamment dans les applications spatiales, et plus généralement dans toutes les applications où l'on recherche une grande efficacité d'échange thermique en termes de puissance transportée, de densité de puissance échangée, d'efficacité des échanges thermiques et, conjointement, une grande compacité et une masse minimum.

En particulier les systèmes spatiaux incorporent des composants -notamment électroniques- qui dissipent de la chaleur et doivent être refroidis pour les maintenir dans des plages de température de plus en plus au resserrées alors qu'ils dissipent des puissances de plus en plus importantes. Les moyens de contrôle thermique passif (notamment par conduction et/ou rayonnement) s'avèrent donc insuffisants. Pour pallier ces insuffisances, on utilise traditionnellement des caloducs qui présentent l'avantage d'une fiabilité et d'une durée de vie plus grande que celle des boucles à fluide caloporteur incorporant des pompes mécaniques.

Les caloducs présentent néanmoins des inconvénients : pour les tester au sol, il est nécessaire de les placer avec une faible inclinaison ne correspondant pas nécessairement à la configuration de vol, ce qui nuit à la représentativité des tests ; ils nécessitent un dimensionnement sur mesure lors de l'intégration dans chaque système spatial ; leur rigidité est une contrainte qui pose des problèmes lors de l'intégration qui est parfois difficile, voire impossible ; ils sont très sensibles aux gaz incondensables qu'ils produisent, et leur efficacité et leurs caractéristiques sont fortement affectées par ces gaz incondensables ; ils présentent une faible capacité de transport de puissance thermique. En conséquence, outre les caloducs, on a proposé l'utilisation de dispositifs d'échange thermique comprenant une ou plusieurs boucle(s) de fluide caloporteur associée à un dispositif de pompage de type capillaire ou mécanique.

Les dispositifs de pompage de type capillaire ont une faible capacité de transport, notamment pour les essais au sol en présence de gravité ; sont complexes à amorcer ; tolèrent mal les modes de fonctionnement extrême (lorsque la puissance transportée devient très faible ou en présence de gaz incondensables).

Des dispositifs de pompage mécanique sous forme d'une pompe centrifuge ont été utilisés en pratique dans certaines missions habitées (navettes, capsules, stations...) pour le fonctionnement de boucles à fluide caloporteur monophasique.

Dans les très rares cas de missions non habitées où un pompage mécanique a été retenu, on a aussi opté pour une pompe centrifuge. Par exemple, l'utilisation d'une pompe à déplacement positif a été rejetée, au bénéfice d'une pompe centrifuge, pour la boucle de contrôle thermique de la sonde martienne «Pathfinder », qui était qualifiée pour une durée de vie de quelques mois.

Par ailleurs, une pompe centrifuge (ou plus généralement une pompe de type rotodynamique) n'est pas appropriée dans le cas d'une boucle à fluide caloporteur diphasique pour le contrôle thermique d'un système spatial tel qu'un satellite commercial, car elle présente une consommation électrique importante, un encombrement important et est d'un coût élevé. Son débit est très sensible à la perte de charge. Or, cette perte de charge peut évoluer en état de microgravité et être très différente en état d'impesanteur, ce qui provoque une variation de débit inacceptable pour le contrôle thermique d'un système spatial tel qu'un satellite.

Le pompage d'un fluide caloporteur dans une boucle diphasique, notamment dans un système spatial, impose des performances particulièrement sévères parmi lesquelles on peut citer : une hauteur de pompage de plusieurs mètres ; une capacité d'amorçage avec un fluide caloporteur au moins partiellement en phase gazeuse ; une compatibilité avec l'utilisation de fluides caloporteurs, tels que l'ammoniac, qui sont pour la plupart de très faible viscosité et corrosifs ; une résistance à une pression statique élevée (pouvant aller jusqu'à 160.105 Pa avec déformation permanente et 80.10⁵ Pa sans déformation permanente) ; un débit de plusieurs grammes par seconde ; une plage de température de fonctionnement entre -50 °C et 75 °C ; une consommation énergétique et un encombrement réduits ; une durée de vie garantie sans maintenance pour plusieurs années, notamment de l'ordre de 10 à 15 ans. En outre, il doit être possible de faire varier la puissance transportée dans une large plage, et de réguler le débit aisément (c'est-à-dire à partir d'un système électronique simple, fiable et peu encombrant) sans affecter la surpression délivrée par la pompe.

Les pompes à déplacement positif (pompes à piston alternatif, pompes à diaphragme, pompes à lumière glissante ou externe, pompes à plateau incliné et pistons, pompes à organe(s) flexible(s) et/ou déformable(s), pompes à engrenages internes ou externes, pompes à lobes, pompes à pistons rotatifs circonférentiels, pompes à vis...), incorporent de nombreuses pièces mobiles en contact dynamique (organes de pompage à déplacements alternatifs tels que pistons ou organes déformables) sujettes à l'usure, et nécessitent des valves d'entrée et de sortie, ainsi que des pièces de transmission de mouvement à l'organe de pompage. La durée de vie de tous ces éléments ne peut pas être déterminée au sol autrement que par des essais de durée de vie, généralement statistiques. En outre, il est considéré que les performances de ce type de pompe varient considérablement selon l'usure et se dégradent donc au cours du temps. Elles génèrent en outre des contraintes importantes sur les matériaux et des vibrations et forces déséquilibrées.

Ainsi, on considère jusqu'à maintenant que les pompes à déplacement positif ne peuvent pas être qualifiées pour les applications spatiales de longue durée de vie, ni pour les autres applications dans lesquelles les mêmes problèmes se posent.

FR2824366, considéré comme divulguant l'état de la technique le plus proche, décrit l'utilisation d'une pompe à lobes (et non à engrenages comme indiqué dans le texte de ce document) à paliers lisses sans lubrifiant dans une boucle diphasique. Néanmoins, la solution retenue n'est pas satisfaisante pour plusieurs raisons. Une telle pompe incorpore nécessairement des pièces en frottement les unes sur les autres induisant des usures importantes difficiles à contrôler. En outre, sa fabrication est particulièrement délicate à mettre au point et à réaliser avec une précision suffisante. En pratique, une telle pompe ne peut pas être qualifiée avec une durée de vie suffisante et pour procurer les performances mentionnées ci-dessus. En effet, les performances demandées ne peuvent être obtenues que par minimisation et maîtrise des jeux fonctionnels pour la durée de vie complète de la pompe. Or, l'usure de paliers de guidage ou de pièces en contact glissant génère nécessairement l'accroissement de tels jeux et donc la dégradation des performances hydrauliques : débits et pressions, voire le blocage de la pompe.

EP 1040274 a par ailleurs proposé une solution dans laquelle la pompe comprend un soufflet déformable entraîné par un actionneur électromagnétique et un manifold à diodes fluidiques de type vortex. Les pompes de ce type délivrent une pression non constante, rythmée par les allées-venues des soufflets ou de la membrane. Une telle variation de pression n'est pas compatible avec une boucle fluide diphasique. De plus, un dispositif à actionneur linéaire simple n'est pas équilibré, son déplacement engendre des efforts inertiels qui se traduisent nécessairement par des micro-vibrations perturbatrices pour la plateforme et les instruments quelle supporte, et donc en général considérées comme rédhibitoires dans un système spatial tel qu'un satellite. Un tel dispositif nécessite donc des mécanismes jumeaux, fonctionnant en opposition de phase, parfaitement synchronisés, ce qui rend dissuasifs l'encombrement, la masse, le réglage, la double commande et le coût d'une telle pompe.

L'invention vise donc à pallier l'ensemble de ces inconvénients en proposant un procédé et un dispositif d'échange thermique du type diphasique dotés de moyens de pompage compatibles d'une part avec leur utilisation à bord d'un système spatial tel qu'un satellite, d'autre part avec les fluides caloporteurs de faible viscosité, et notamment les fluides caloporteurs corrosifs tels que l'ammoniac.

Plus particulièrement, l'invention vise à proposer un procédé et un dispositif d'échange thermique dotés de moyens de pompage présentant des performances hydrauliques adaptées, dont la durée de vie peut être garantie avant utilisation sur plusieurs années, notamment entre 10 et 15 ans sans intervention de maintenance, pouvant être commandés de façon simple en ajustant notamment le débit délivré, et non susceptibles de générer des vibrations perturbatrices de leur environnement.

Pour ce faire l'invention concerne un procédé d'échange thermique du type diphasique dans lequel :
- on utilise un fluide caloporteur de viscosité inférieure à celle de l'eau, susceptible de se présenter au moins partiellement à l'état liquide et au moins partiellement à l'état vapeur,
- on entraîne par pompage ledit fluide caloporteur en déplacement dans un circuit comprenant des moyens d'échange thermique avec au moins une source froide et au moins une source chaude externes au circuit, ledit fluide caloporteur changeant au moins partiellement d'état au contact desdits moyens d'échange thermique,
   caractérisé en ce qu'on utilise des moyens de pompage comprenant une pompe à engrenages comportant :
- un carter,
- au moins deux pignons à dentures droites externes en coopération d'engrènement l'un avec l'autre sans déport,
- chaque pignon étant monté solidaire d'un arbre guidé en rotation et aligné par rapport au carter par des roulements,
- les arbres des pignons étant parallèles l'un à l'autre,
- des moyens d'accouplement d'au moins l'un des arbres des pignons à un moteur d'entraînement adapté pour entraîner ce dernier en rotation à une vitesse inférieure à 250 tours par minute,
- dans le carter, une chambre de pompage et de circulation du fluide caloporteur, cette chambre étant délimitée par des parois internes, contenant les pignons, et comprenant au moins une entrée d'admission du fluide caloporteur d'un côté de l'engrènement des pignons et au moins une sortie de refoulement du fluide caloporteur de l'autre côté de l'engrènement des pignons,
- des jeux étant ménagés radialement et axialement entre les parois internes de ladite chambre et les pignons, ces jeux étant tous inférieurs au centième de millimètre et, en fonctionnement, remplis de fluide caloporteur.

L'invention s'étend à un dispositif d'échange thermique du type diphasique comprenant :
- un fluide caloporteur de viscosité inférieure à celle de l'eau, susceptible de se présenter au moins partiellement à l'état liquide et au moins partiellement à l'état vapeur,
- des moyens de pompage dudit fluide caloporteur aptes à l'entraîner en déplacement dans un circuit comprenant des moyens d'échange thermique avec au moins une source froide et au moins une source chaude externes au circuit, ledit fluide caloporteur changeant au moins partiellement d'état au contact desdits moyens d'échange thermique,
   caractérisé en ce que lesdits moyens de pompage comprennent une pompe à engrenages comportant :
- un carter,
- au moins deux pignons à dentures droites externes en coopération d'engrènement l'un avec l'autre sans déport,
- chaque pignon étant monté solidaire d'un arbre guidé en rotation et aligné par rapport au carter par des roulements,
- les arbres des pignons étant parallèles l'un à l'autre,
- des moyens d'accouplement d'au moins l'un des arbres des pignons à un moteur d'entraînement adapté pour entraîner ce dernier en rotation à une vitesse inférieure à 250 tours par minute,
- dans le carter, une chambre de pompage et de circulation du fluide caloporteur, cette chambre étant délimitée par des parois internes, contenant les pignons, et comprenant au moins une entrée d'admission du fluide caloporteur d'un côté de l'engrènement des pignons et au moins une sortie de refoulement du fluide caloporteur de l'autre côté de l'engrènement des pignons,
- des jeux étant ménagés radialement et axialement entre les parois internes de ladite chambre et les pignons, ces jeux étant tous inférieurs au centième de millimètre et, en fonctionnement, remplis de fluide caloporteur.

Avantageusement et selon l'invention, on entraîne la pompe à engrenages à une vitesse de rotation inférieure à 250 tours par minute.

Par ailleurs, avantageusement et selon l'invention, ledit fluide caloporteur étant de l'ammoniac, on entraîne la pompe à engrenages à une vitesse de rotation adaptée pour que la pompe à engrenages délivre un débit de fluide caloporteur sensiblement constant compris entre 1 g/s et 100 g/s -notamment de l'ordre de 10 g/s-.

En outre, avantageusement, dans un procédé et un dispositif d'échange thermique selon l'invention, on utilise une pompe caractérisée en combinaison à tout ou partie des caractéristiques suivantes :
- chaque arbre de pignon est guidé par rapport au carter uniquement par des roulements coopérant avec un flasque unique du carter et avec une portion de l'arbre s'étendant d'un seul côté du pignon ;
- chaque arbre de pignon est guidé par rapport au carter par deux roulements à billes qui se jouxtent ;
- les deux roulements sont montés serrés axialement l'un contre l'autre avec une précharge en compression axiale dite solide (résultant à la fois de la contrainte en compression des bagues serrées axialement les unes contre les autres et du rattrapage des jeux entre bagues) et selon un montage dit en « O » (les directions des efforts de contact dans les roulements dessinant sensiblement un O) ou « dos à dors » ;
- chaque roulement comprend des organes roulants dont au moins les surfaces roulantes sont formées en un matériau choisi parmi les matériaux non métalliques -notamment en céramique-, et les matériaux métalliques inoxydables ;
- chaque roulement comprend des cages avantageusement formées dans un matériau autolubrifiant, notamment choisi parmi les matériaux métalliques, les matériaux polymériques (notamment thermoplastiques), et les matériaux composites ;
- les pièces de la pompe susceptibles de venir au contact du fluide caloporteur sont formées dans un matériau résistant à la corrosion et/ou présentent un revêtement de surface résistant à la corrosion -notamment un dépôt chimique de nickel métallique-.

Selon l'invention, la pompe est ainsi conçue pour minimiser les frottements et en particulier supprimer tout frottement de glissement, et donc tout phénomène d'usure pouvant en altérer les performances ou la durée de vie.

L'invention concerne également un dispositif et un procédé caractérisés en combinaison par tout ou partie des caractéristiques mentionnées ci-dessus ou ci-après.

D'autres caractéristiques, buts et avantages de l'invention apparaîtront à la lecture de la description suivante qui se réfère aux figures annexées dans lesquelles :
- la figure 1 est un schéma d'un exemple de dispositif d'échange thermique selon l'invention,
- la figure 2 est une vue schématique en perspective éclatée d'une pompe à engrenages d'un dispositif selon un mode de réalisation de l'invention,
- la figure 3 est une vue schématique en perspective de la pompe de la figure 2 sous un autre angle de vue,
- la figure 4 est une vue schématique en coupe par un plan passant par les axes de rotation des pignons de la pompe de la figure 2,
- la figure 5 est une vue schématique en coupe selon la ligne V-V de la figure 4,
- la figure 6 est une vue schématique en coupe d'un détail selon la ligne VI-VI de la figure 5,
- la figure 7 est une vue schématique en coupe d'un détail selon la ligne VII-VII de la figure 5,
- la figure 8 est un diagramme représentant des courbes de performances débit/pression d'une pompe selon le mode de réalisation des figures 2 à 6 conforme à l'invention, comparativement à une courbe de performances d'une pompe conforme à l'état de la technique.

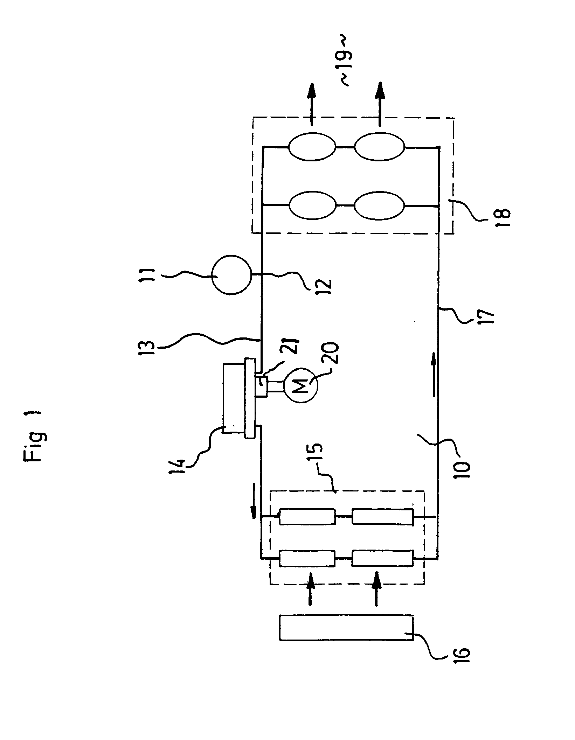

Le dispositif d'échange thermique selon l'invention représenté figure 1 comprend une boucle 10 d'échange thermique dans laquelle circule un fluide caloporteur diphasique tel que de l'ammoniac. De tels fluides caloporteurs diphasiques susceptibles de se présenter au moins partiellement à l'état liquide et au moins partiellement l'état vapeur, présentent pour la plupart une viscosité très faible, inférieure à celle de l'eau.

Le fluide caloporteur est délivré à partir d'un réservoir 11 pressuriseur diphasique dont la sortie 12 est reliée à une conduite 13 connectée à une pompe 14 à engrenages selon l'invention. Dans cette conduite 13, le fluide caloporteur est principalement liquide, normalement sensiblement monophasique (c'est-à-dire uniquement liquide). Il est cependant possible que le fluide dans la conduite 13 soit au moins pour partie vapeur, et c'est un avantage de l'invention que de permettre le fonctionnement de la boucle diphasique et le pompage du fluide d'échange thermique, même dans le cas où celui-ci est partiellement vapeur dans la conduite 13.

La pompe 14 délivre le fluide à l'état liquide sous pression à un groupe 15 échangeur évaporateur adapté pour recueillir la puissance thermique (calories) dégagée par des composants exothermiques 16 (par exemple des circuits électroniques d'un système spatial).

À la sortie du groupe 15 évaporateur, le fluide est amené à l'état diphasique liquide/gaz, (la proportion de fluide l'état vapeur dépendant de la puissance absorbée dans le groupe 15 évaporateur), dans une conduite 17 reliée à un groupe 18 échangeur condenseur fournissant le fluide à l'état liquide dans la conduite 13 à l'amont de la sortie 12 du réservoir 11, après avoir extrait la puissance thermique du fluide à l'état diphasique vers une source froide 19 (par exemple l'environnement extérieur).

La pompe 14 est entraînée par un moteur 20 quelconque, de préférence un moteur électrique synchrone sans balai, par exemple via un accouplement étanche magnétique 21.

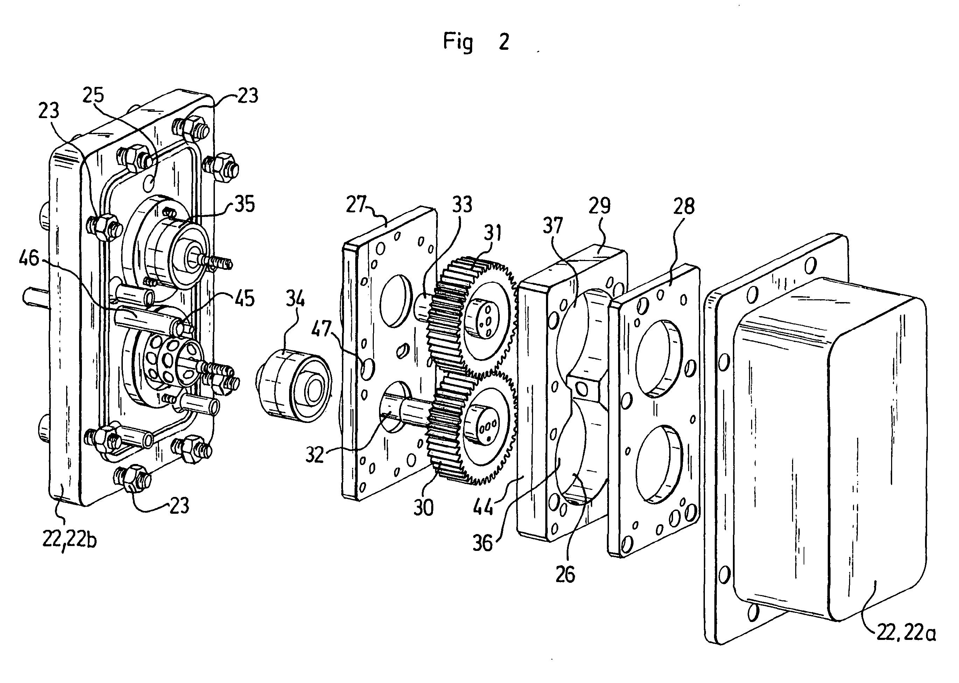

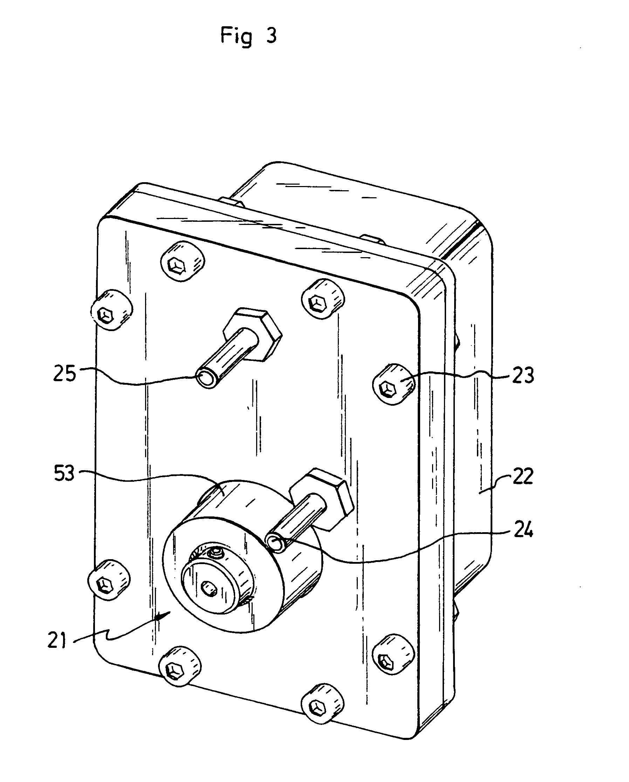

Les figures 2 à 6 représentent un exemple de réalisation d'une pompe 14 pouvant être utilisée dans un dispositif selon l'invention.

Cette pompe 14 comprend un carter 22 périphérique étanche formé d'un boîtier parallélépipédique 22a dont les dimensions sont adaptées pour contenir les différents éléments constitutifs de la pompe, ce boîtier étant refermé par un flasque formant couvercle 22b serré sur le boîtier par des vis ou boulons 23.

Le couvercle 23 présente un orifice 24 d'admission en fluide, et un orifice 25 de refoulement du fluide sous pression. Ces orifices 24, 25 communiquent à travers le couvercle 22b avec l'intérieur du carter 22.

À l'intérieur du carter 22, une chambre 26 de pompage et de circulation du fluide caloporteur est ménagée entre deux flasques parallèles 27, 28 séparés par un flasque 29 entretoise. Ces trois flasques 27, 28, 29 sont serrés les uns contre les autres par des vis ou boulons (non représentés), et l'ensemble formé par ces trois flasques 27, 28, 29 est lui-même fixé rigidement sur la face interne du couvercle 22b par des vis ou boulons (non représentés). Les flasques 27, 28, 29 sont logés dans le carter 22, mais présentent une dimension légèrement inférieure à l'enceinte interne définie dans le carter 22, de façon à ménager un espace 42 de refoulement permettant la circulation du fluide du côté refoulement comme décrit ci-après.

Les flasques 27, 28, 29 sont évidés de façon à délimiter, avec les dentures externes de deux pignons 30, 31, la chambre 26 de pompage et de circulation, cette dernière présentant des dimensions et une forme apte à loger les deux pignons 30, 31 à dentures droites externes en coopération d'engrènement l'un avec l'autre sans déport. Chaque pignon 30, 31 est monté solidaire d'un arbre 32, respectivement 33, guidé en rotation et aligné par rapport au carter par des roulements 34, respectivement 35.

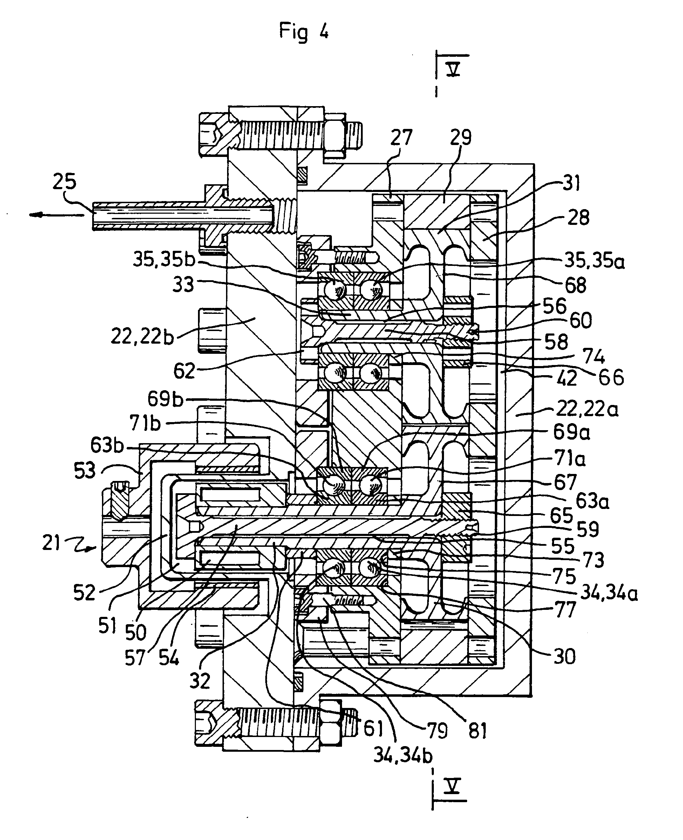

Les arbres 32, 33 des pignons sont parallèles l'un à l'autre, et l'un 32 au moins des arbres, dit arbre 32 menant, s'étend vers et dans le couvercle 22b de façon à présenter une extrémité portant une série d'aimants 50 permanents internes adaptés pour former l'accouplement magnétique 21 permettant l'accouplement de cet arbre 32 menant à l'arbre du moteur 20, et donc l'entraînement par ce dernier de l'arbre 32 menant et du pignon 30, dit pignon 30 menant. Comme on le voit figure 4, les aimants 50 internes de l'extrémité de l'arbre 32 menant sont logés dans une cavité 51 du couvercle 22b délimitée par une paroi 52 formant une protubérance s'étendant vers l'extérieur de ce dernier de façon à pouvoir être chapeautée par une cloche 53 portant également des aimants 54 permanents externes adaptés pour pouvoir coopérer magnétiquement à travers la paroi 52 avec les aimants 50 internes, constituant ainsi l'accouplement magnétique 21. Lorsque la cloche 53 est entraînée en rotation, elle entraîne elle-même en rotation les aimants 50 internes, et donc l'arbre 32 menant. Cette cloche 53 est adaptée pour recevoir l'extrémité de l'arbre du moteur 20 et être solidaire en rotation de ce dernier.

L'autre pignon 31, dit pignon 31 mené, ainsi que son arbre 33, dit arbre 33 mené, sont entraînés en rotation par le pignon 30 menant du fait de la coopération d'engrènement des pignons 30, 31.

La chambre 26 de pompage et de circulation comprend un premier lobe 36 de forme générale cylindrique de révolution autour de l'axe de l'arbre 32 menant, ce premier lobe 36 étant adapté pour loger au plus près, avec le minimum de jeux radiaux et axiaux, le pignon 30 menant. De même, la chambre 26 de pompage de circulation comprend un deuxième lobe 37 de forme générale cylindrique de révolution autour de l'axe de l'arbre 33 mené, ce deuxième lobe 37 étant adapté pour loger au plus près, avec le minimum de jeux radiaux et axiaux, le pignon 31 mené.

La chambre 26 de pompage et de circulation comprend également, entre les deux lobes 36, 37, d'une part une chambre 38 d'admission située d'un premier côté de l'engrènement des pignons, d'autre part une chambre 39 de refoulement située de l'autre côté de l'engrènement des pignons. La chambre 38 d'admission est en communication avec l'orifice 24 d'admission. La chambre 39 de refoulement est en communication avec l'orifice 25 de refoulement. Pour ce faire, le flasque 29 entretoise et/ou le flasque 27, dit flasque 27 porte roulements, interposé entre le flasque 29 entretoise et le couvercle 22b présentent des lumières traversantes.

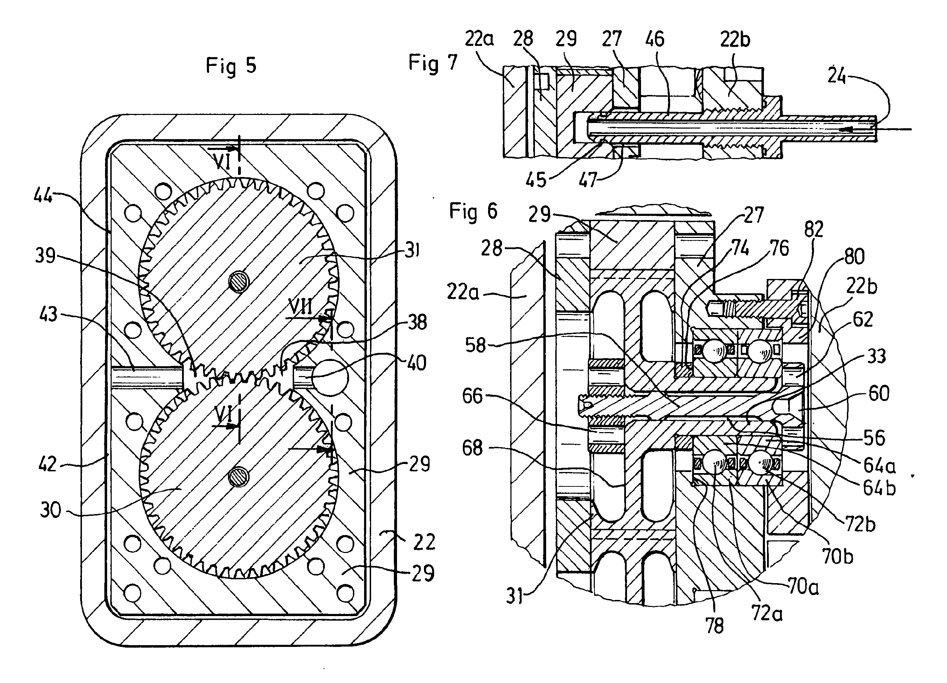

Dans le mode de réalisation représenté, le flasque 29 entretoise présente une lumière 43 de refoulement s'étendant latéralement (selon une direction orthogonale à l'axe des arbres 32, 33 des pignons) à partir de la chambre 39 de refoulement jusqu'à déboucher au niveau du chant 44 périphérique extérieur du flasque 29 entretoise de sorte que le fluide pressurisé s'échappant par cette lumière 43 de refoulement s'écoule dans l'espace 42 de refoulement s'étendant entre les flasques 27, 28, 29 et la paroi interne du carter 22, jusqu'à l'orifice 25 de refoulement qui est en communication avec cet espace 42 de refoulement. Le flasque 29 entretoise présente également une lumière 40 d'admission s'étendant latéralement (selon une direction orthogonale à l'axe des arbres 32, 33 des pignons) à partir de la chambre 38 d'admission et jusqu'à une lumière 41 de connexion ménagée dans le flasque 29 entretoise et débouchant sur la face du flasque 29 entretoise en contact avec le flasque 27 porte roulements, cette lumière 41 de connexion recevant de façon étanche l'extrémité 45 d'un tube 46 d'admission traversant une lumière de passage 47 du flasque 27 porte roulements et le couvercle 22b pour former l'orifice 24 d'admission (figure 7).

Chacun des arbres 32, 33 des pignons 30, 31 s'étend axialement d'un côté seulement du pignon 30, 31 et est guidé par rapport au carter 22 en porte-à-faux uniquement par des roulements 34, 35 coopérant uniquement avec le flasque 27 porte roulements du carter 22 (figures 4 et 6).

Pour assurer l'alignement, chaque arbre 32, 33 de pignon est guidé par rapport au carter 22 par deux roulements à billes 34a, 34b, respectivement 35a, 35b qui se jouxtent axialement, à savoir un roulement proximal 34a, 35a qui est axialement le plus proche du pignon 30, 31, et un roulement distal 34b, 35b qui est axialement le plus éloigné du pignon 30, 31. Chaque roulement présente une bague intérieure 63a, 63b, 64a, 64b, une bague extérieure 69a, 69b, 70a, 70b, et des billes 71 a, 71b, 72a, 72b.

En outre, les deux roulements à billes à contact oblique 34a, 34b, respectivement 35a, 35b de chaque arbre 32, 33 de pignon sont montés selon un montage dit à contact oblique en « O » (ou « dos à dos »), serrés axialement l'un contre l'autre avec une précharge axiale dite solide (par rattrapage de jeux et serrage en compression axiale des pièces en contact, sans organe élastique en flexion tel qu'une rondelle Belleville) entraînant une précharge radiale des roulements à rapport au flasque 27 porte roulements et une précharge radiale des billes des roulements dans les bagues de ces derniers.

Pour ce faire, l'arbre 32, 33 de pignon présente un alésage 55, 56 traversant axial à travers lequel est passée la tige 57, 58 d'un boulon 59, 60 présentant une tête ou écrou 61, 62 en appui sur la bague intérieure 63b, 64b du roulement 34b, 35b distal, et, à son autre extrémité axiale, une tête ou écrou 65, 66 en appui sur la face 67, 68 radiale externe du pignon 30, 31 s'étendant à l'opposé de l'arbre 32, 33. La bague intérieure 63b, 64b du roulement 34b, 35b distal s'étend axialement au-delà de l'extrémité de l'arbre 32, 33, de telle sorte que le serrage du boulon 59, 60 entraîne une contrainte axiale de serrage des bagues intérieures 63a, 63b annulant le jeu entre les bagues intérieures et déterminant la précharge voulue, et, respectivement, 64a, 64b des deux roulements qui se jouxtent l'une contre l'autre. Ainsi, les directions des efforts de contact entre les billes et les pistes des bagues intérieures et extérieures sont obliques et dessinent sensiblement un O. Un tel montage en «O» assure une très grande stabilité axiale sans basculement.

Une entretoise 73, 74 de calage est interposée entre la bague intérieure 63a, 64a du roulement proximal 34a, 35a et un épaulement 75, 76 radial du pignon 30, 31 de façon à déterminer (selon la largeur de l'entretoise 73 , 74) la position axiale du pignon 30, 31.

Les bagues extérieures 69a, 69b, 70a, 70b des roulements sont fixées sur le flasque 27 porte roulements et serrées les unes contre les autres axialement. Pour ce faire, le flasque 27 porte roulements présente un épaulement 77, 78 recevant la bague extérieure 69a, 70a du roulement proximal, et une bague 79, 80 de serrage est appliquée à l'opposé contre la bague extérieure 69b, 70b du roulement distal, et cette bague 79, 80 de serrage est serrée axialement contre le flasque 27 porte roulements par des vis 81, 82.

Il résulte de ce montage que les roulements sont parfaitement fixés, sans jeu, sur le flasque 27 porte roulements, qu'ils sont parfaitement alignés selon l'axe de l'arbre 32, 33, que chaque arbre 32, 33 de pignon est lui-même parfaitement positionné et aligné par rapport au flasque 27 porte roulements, et que les jeux de fonctionnement dans les roulements sont annulés. Un tel montage en « O » sans jeu permet d'augmenter la rigidité au basculement de chaque axe et présente non seulement l'avantage d'éviter toute vibration et toute détérioration lors du lancement d'un système spatial, mais également et surtout permet également de guider précisément les axes et de minimiser les jeux dans la chambre de pompage de circulation et d'assurer le pompage d'un fluide de très faible viscosité tel que de l'ammoniac avec une telle pompe à engrenages.

Le fluide caloporteur utilisé étant parfois susceptible d'être corrosif, comme dans le cas de l'ammoniac, les matériaux constitutifs des roulements doivent être choisis de façon à être compatibles avec ce fluide. En particulier, les billes 71 a, 71b, 72a, 72b sont formées d'un matériau non métallique, notamment en céramique. En outre, les roulements présentent des cages formées en matériaux métalliques ou plastiques ou composites et sont de préférence autolubrifiées, c'est-à-dire incorporent une poudre formant un film lubrifiant maintenu par transfert entre les billes et les bagues des roulements.

En outre, les pièces de la pompe susceptibles de venir au contact du fluide caloporteur peuvent présenter un revêtement de surface résistant à la corrosion -notamment à dépôt chimique de nickel métallique-.

En pratique, dans une telle pompe selon l'invention, les jeux s'étendant radialement et axialement entre les parois internes de la chambre de pompage et les pignons peuvent être tous inférieurs au centième de millimètre et, en fonctionnement, remplis de fluide caloporteur. Pour autant, il n'y a aucun risque de contact direct des pignons avec les parois internes de la chambre de pompage et la durée de vie et de fonctionnement d'une telle pompe peut être garantie sur un grand nombre d'années.

Par ailleurs, il a été constaté avec surprise qu'il existe un régime de fonctionnement d'une telle pompe dans lequel d'une part la pompe présente des performances élevées en termes de débit et de pressurisation d'un fluide caloporteur de faible viscosité, et ce dans une large plage de température, et d'autre part les fuites sont minimisées. En pratique, le moteur d'entraînement 20 doit être adapté et commandé pour entraîner l'arbre 32 menant et les pignons 30, 31 en rotation à une vitesse inférieure à 250 tours par minute, notamment entre 50 tours par minute et 220 tours par minute.

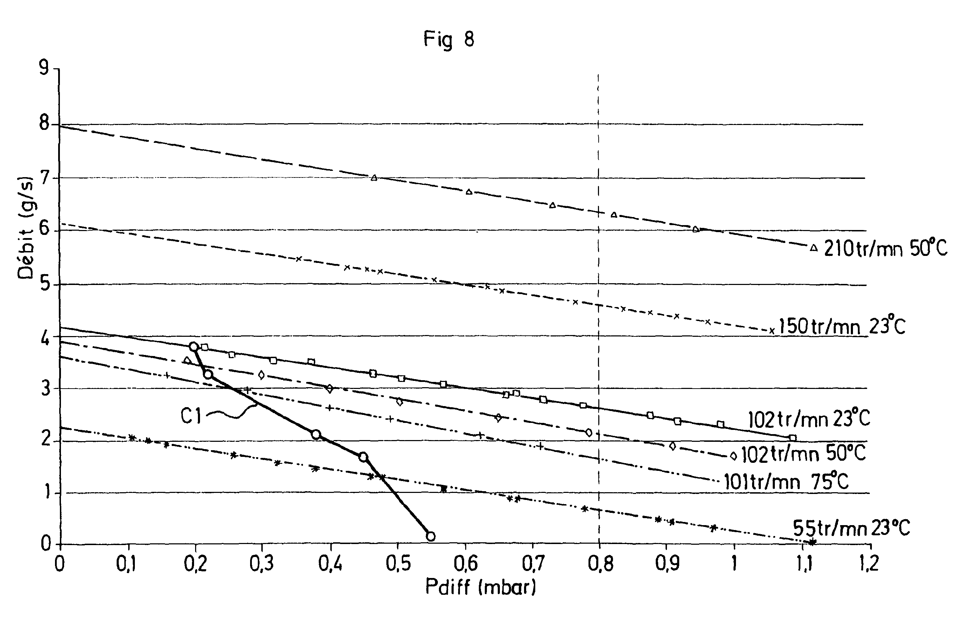

La figure 8 présente les caractéristiques d'une telle pompe obtenues dans le cas de l'ammoniac utilisé à titre de fluide caloporteur. La courbe C1 représente la caractéristique d'une pompe conforme à FR2824366. La faible décroissance de la valeur du débit délivré par la pompe en fonction de l'augmentation de la différence de pression entre le refoulement et l'admission (liée à la perte de charge hydraulique dans la boucle 10) permet d'atteindre des valeurs de débit et de pressurisation importantes, sans fuites, compatibles avec le fonctionnement d'une telle boucle thermique dans un système spatial.

En particulier, il est possible d'entraîner la pompe 14 à une vitesse de rotation inférieure à 250 tours minute adaptée pour qu'elle délivre un débit de fluide caloporteur sensiblement constant compris entre 1g/s et 100g/s, plus particulièrement entre 1g/s et 10g/s, avec une pression différentielle (entre le refoulement et l'admission) comprise entre 0,1hPa et 1,5hPa, la valeur du débit fourni ne variant pas de plus de 3g/s entre ces deux valeurs extrêmes de la pression différentielle.

L'invention peut être notamment appliquée pour le contrôle thermique de composants exothermiques, par exemple des circuits électroniques, dans un système spatial tel qu'un satellite. Le dispositif selon l'invention est alors un dispositif de contrôle thermique de composants 16 exothermiques d'un système spatial, tel qu'un satellite ou une station spatiale, le circuit 13, 17 formant une boucle de fluide caloporteur diphasique, lesdits composants 16 formant une source chaude qui est externe au circuit et est associée à ce dernier par des moyens 15 d'échange thermique en vue de leur refroidissement.

Il va de soi que l'invention de faire l'objet de nombreuses variantes de réalisation par rapport au mode de réalisation décrit ci-dessus et représenté sur les figures, donné uniquement à titre d'exemple non limitatif.

## Revendications

1. Procédé d'échange thermique du type diphasique dans lequel :
- on utilise un fluide caloporteur de viscosité inférieure à celle de l'eau, susceptible de se présenter au moins partiellement à l'état liquide et au moins partiellement à l'état vapeur,
- on entraîne par pompage ledit fluide caloporteur en déplacement dans un circuit (13, 17) comprenant des moyens (15, 18) d'échange thermique avec au moins une source froide (19) et au moins une source chaude (16) externes au circuit, ledit fluide caloporteur changeant au moins partiellement d'état au contact desdits moyens (15, 18) d'échange thermique,
**caractérisé en ce qu'**on utilise des moyens de pompage comprenant une pompe (14) à engrenages comportant :
- un carter (22),
- au moins deux pignons (30, 31) à dentures droites externes en coopération d'engrènement l'un avec l'autre sans déport,
- chaque pignon (30, 31) étant monté solidaire d'un arbre (32, 33) guidé en rotation et aligné par rapport au carter (2) par des roulements (34, 35),
- les arbres (32, 33) des pignons étant parallèles l'un à l'autre,
- des moyens d'accouplement d'au moins l'un (32) des arbres des pignons à un moteur (20) d'entraînement adapté pour entraîner ce dernier en rotation à une vitesse inférieure à 250 tours par minute,
- dans le carter (22), une chambre (26) de pompage et de circulation du fluide caloporteur, cette chambre (26) étant délimitée par des parois internes, contenant les pignons (30, 31), et comprenant au moins une entrée (38) d'admission du fluide caloporteur d'un côté de l'engrènement des pignons (30, 31) et au moins une sortie (39) de refoulement du fluide caloporteur de l'autre côté de l'engrènement des pignons (30, 31),
- des jeux étant ménagés radialement et axialement entre les parois internes de ladite chambre (26) et les pignons (30, 31), ces jeux étant tous inférieurs au centième de millimètre et, en fonctionnement, remplis de fluide caloporteur.

2. Procédé selon la revendication 1, **caractérisé en ce qu'**on entraîne la pompe (14) à engrenages à une vitesse de rotation inférieure à 250 tours par minute.

3. Procédé selon l'une des revendications 1 ou 2, **caractérisé en ce que** ledit fluide caloporteur étant de l'ammoniac, on entraîne la pompe (14) à engrenages à une vitesse de rotation adaptée pour que la pompe (14) à engrenages délivre un débit de fluide caloporteur sensiblement constant compris entre 1 g/s et 100 g/s -notamment de l'ordre de 10 g/s-.

4. Procédé selon l'une des revendications 1 à 3, **caractérisé en ce qu'**on utilise une pompe (14) dans laquelle chaque arbre (32, 33) de pignon est guidé par rapport au carter (22) uniquement par des roulements (34, 35) coopérant avec un flasque (27) unique solidaire du carter et avec une portion de l'arbre (32, 33) s'étendant d'un seul côté du pignon (30, 31).

5. Procédé selon l'une des revendications 1 à 4, **caractérisé en ce qu'**on utilise une pompe (14) dans laquelle chaque arbre (32, 33) de pignon est guidé par rapport au carter (22) par deux roulements (34a, 34b ; 35a, 35b) à billes qui se jouxtent.

6. Procédé selon l'une des revendications 1 à 5, **caractérisé en ce qu'**on utilise une pompe (14) dans laquelle les deux roulements (34a, 34b ; 35a, 35b) sont à contact oblique et montés serrés axialement l'un contre l'autre avec une précharge axiale.

7. Procédé selon l'une des revendications 1 à 6, **caractérisé en ce que** le fluide caloporteur est susceptible d'être corrosif, et **en ce qu'**on utilise une pompe (14) dans laquelle chaque roulement (34, 35) comprend des organes roulants (71 a, 71b ; 72a, 72b) dont au moins les surfaces externes sont formées en un matériau choisi parmi les matériaux non métalliques -notamment en céramique-, et les matériaux métalliques inoxydables.

8. Procédé selon l'une des revendications 1 à 7, **caractérisé en ce qu'**on utilise une pompe (14) dans laquelle les pièces de la pompe susceptibles de venir au contact du fluide caloporteur sont formées dans un matériau résistant à la corrosion et/ou présentent un revêtement de surface résistant à la corrosion -notamment un dépôt chimique de nickel métallique-.

9. Dispositif d'échange thermique du type diphasique comprenant :
- un fluide caloporteur de viscosité inférieure à celle de l'eau, susceptible de se présenter au moins partiellement à l'état liquide et au moins partiellement à l'état vapeur,
- des moyens de pompage dudit fluide caloporteur aptes à l'entraîner en déplacement dans un circuit (13, 17) comprenant des moyens (15, 18) d'échange thermique avec au moins une source froide (19) et au moins une source chaude (16) externes au circuit, ledit fluide caloporteur changeant au moins partiellement d'état au contact desdits moyens (15, 18) d'échange thermique, **caractérisé en ce que** lesdits moyens de pompage comprennent une pompe (14) à engrenages comportant :
- un carter (22),
- au moins deux pignons (30, 31) à dentures droites externes en coopération d'engrènement l'un avec l'autre sans déport,
- chaque pignon (30, 31) étant monté solidaire d'un arbre (32, 33) guidé en rotation et aligné par rapport au carter (2) par des roulements (34, 35),
- les arbres (32, 33) des pignons étant parallèles l'un à l'autre,
- des moyens d'accouplement d'au moins l'un (32) des arbres des pignons à un moteur (20) d'entraînement adapté pour entraîner ce dernier en rotation à une vitesse inférieure à 250 tours par minute,
- dans le carter (22), une chambre (26) de pompage et de circulation du fluide caloporteur, cette chambre (26) étant délimitée par des parois internes, contenant les pignons (30, 31), et comprenant au moins une entrée (38) d'admission du fluide caloporteur d'un côté de l'engrènement des pignons (30, 31) et au moins une sortie (39) de refoulement du fluide caloporteur de l'autre côté de l'engrènement des pignons (30, 31),
- des jeux étant ménagés radialement et axialement entre les parois internes de ladite chambre (26) et les pignons (30, 31), ces jeux étant tous inférieurs au centième de millimètre et, en fonctionnement, remplis de fluide caloporteur.

10. Dispositif selon la revendication 9, **caractérisé en ce que** chaque arbre (32, 33) de pignon de la pompe (14) est guidé par rapport au carter (22) uniquement par des roulements (34, 35) coopérant avec un flasque (27) unique solidaire du carter et avec une portion de l'arbre (32, 33) s'étendant d'un seul côté du pignon (30, 31).

11. Dispositif selon la revendication 10, **caractérisé en ce que** chaque arbre (32, 33) de pignon de la pompe (14) est guidé par rapport au carter (22) par deux roulements (34a, 34b ; 35a, 35b) à billes qui se jouxtent.

12. Dispositif selon la revendication 11, **caractérisé en ce que** les deux roulements (34a, 34b ; 35a, 35b) de la pompe (14) sont montés serrés axialement l'un contre l'autre avec une précharge axiale.

13. Dispositif selon l'une des revendications 9 à 12, **caractérisé en ce que** le fluide caloporteur est susceptible d'être corrosif, et **en ce que** chaque roulement (34, 35) de la pompe (14) comprend des organes roulants (71a, 71b ; 72a, 72b) dont au moins les surfaces externes sont formées en un matériau choisi parmi les matériaux non métalliques -notamment en céramique-, et les matériaux métalliques inoxydables.

14. Dispositif selon l'une des revendications 9 à 13, **caractérisé en ce que** les pièces de la pompe (14) susceptibles de venir au contact du fluide caloporteur présentent un revêtement de surface résistant à la corrosion -notamment un dépôt chimique de nickel métallique-.

15. Dispositif selon l'une des revendications 9 à 14, **caractérisé en ce qu'**il s'agit d'un dispositif de contrôle thermique de composants (16) d'un système spatial, tel qu'un satellite ou une station spatiale, ledit circuit (13, 17) formant une boucle de fluide caloporteur diphasique, lesdits composants (16) formant une source chaude externe au circuit (13, 17), et associée à ce dernier par des moyens (15) d'échange thermique en vue de leur refroidissement.

## Claims

1. Heat exchange method of the two-phase type in which:
- a coolant with a viscosity less than that of water and capable of being at least partially in the liquid state and at least partially in the vapour state is used,
- the said coolant is driven by pumping so as to move in a circuit (13, 17) comprising heat exchange means (15, 18) with at least one cold source (19) and at least one hot source (16) outside the circuit, the said coolant at least partially changing state on contact with the said heat exchange means (15, 18),
**characterised in that** pumping means are used which comprise a gear pump (14) having:
- a case (22),
- at least two gears (30, 31) with external spur toothing in meshing cooperation with one another without addendum modification,
- each gear (30, 31) being mounted fixedly on a shaft (32, 33) which is guided in rotation and aligned with respect to the case (2) by rolling bearings (34, 35),
- the shafts (32, 33) of the gears being parallel to one another,
- means for coupling at least one (32) of the shafts of the gears to a drive motor (20) adapted to drive the latter in rotation at a speed less than 250 rpm,
- in the case (22), a chamber (26) for pumping and circulation of the coolant, this chamber (26) being delimited by internal walls, containing the gears (30, 31), and comprising at least one inlet (38) for admission of the coolant on one side of the meshing of the gears (30, 31) and at least one outlet (39) for delivery of the coolant on the other side of the meshing of the gears (30, 31),
- clearances being formed radially and axially between the internal walls of the said chamber (26) and the gears (30, 31), these clearances all being less than a hundredth of a millimetre and, during operation, being filled with coolant.

2. Method according to Claim 1, **characterised in that** the gear pump (14) is driven at a rotational speed less than 250 rpm.

3. Method according to one of Claims 1 and 2, **characterised in that** when the said coolant is ammonia, the gear pump (14) is driven at a rotational speed adapted so that the gear pump (14) delivers a substantially constant coolant flow rate of between 1 g/s and 100 g/s, in particular of the order of 10 g/s.

4. Method according to one of Claims 1 to 3, **characterised in that** a pump (14) is used, in which each gear shaft (32, 33) is guided with respect to the case (22) solely by rolling bearings (34, 35) cooperating with a single plate (27) fixed to the case and with a portion of the shaft (32, 33) extending on only one side of the gear (30, 31).

5. Method according to one of Claims 1 to 4, **characterised in that** a pump (14) is used, in which each gear shaft (32, 33) is guided with respect to the case (22) by two ball-type rolling bearings (34a, 34b; 35a, 35b) which adjoin one another.

6. Method according to one of Claims 1 to 5, **characterised in that** a pump (14) is used, in which the two rolling bearings (34a, 34b; 35a, 35b) are of angular-contact type and mounted clamped axially against one another with an axial preload.

7. Method according to one of Claims 1 to 6, **characterised in that** the coolant may be corrosive, and **in that** a pump (14) is used, in which each rolling bearing (34, 35) comprises rolling elements (71a, 71b; 72a, 72b), of which at least the outer surfaces are formed of a material chosen from non-metallic, in particular ceramic, materials, and inoxidisable metallic materials.

8. Method according to one of Claims 1 to 7, **characterised in that** a pump (14) is used, in which the parts of the pump which are likely to come into contact with the coolant are formed of a corrosion-resistant material and/or have a corrosion-resistant surface coating, in particular a chemical coating of metallic nickel.

9. Heat exchange device of the two-phase type comprising:
- a coolant with a viscosity less than that of water and capable of being at least partially in the liquid state and at least partially in the vapour state,
- means for pumping the said coolant which are capable of driving it so as to move in a circuit (13, 17) comprising heat exchange means (15, 18) with at least one cold source (19) and at least one hot source (16) outside the circuit, the said coolant at least partially changing state on contact with the said heat exchange means (15, 18),
**characterised in that** the said pumping means comprise a gear pump (14) having:
- a case (22),
- at least two gears (30, 31) with external spur toothing in meshing cooperation with one another without addendum modification,
- each gear (30, 31) being mounted fixedly on a shaft (32, 33) which is guided in rotation and aligned with respect to the case (2) by rolling bearings (34, 35),
- the shafts (32, 33) of the gears being parallel to one another,
- means for coupling at least one (32) of the shafts of the gears to a drive motor (20) adapted to drive the latter in rotation at a speed less than 250 rpm,
- in the case (22), a chamber (26) for pumping and circulation of the coolant, this chamber (26) being delimited by internal walls, containing the gears (30, 31), and comprising at least one inlet (38) for admission of the coolant on one side of the meshing of the gears (30, 31) and at least one outlet (39) for delivery of the coolant on the other side of the meshing of the gears (30, 31),
- clearances being formed radially and axially between the internal walls of the said chamber (26) and the gears (30, 31), these clearances all being less than a hundredth of a millimetre and, during operation, being filled with coolant.

10. Device according to Claim 9, **characterised in that** each gear shaft (32, 33) of the pump (14) is guided with respect to the case (22) solely by rolling bearings (34, 35) cooperating with a single plate (27) fixed to the case and with a portion of the shaft (32, 33) extending on only one side of the gear (30, 31).

11. Device according to Claim 10, **characterised in that** each gear shaft (32, 33) of the pump (14) is guided with respect to the case (22) by two ball-type rolling bearings (34a, 34b; 35a, 35b) which adjoin one another.

12. Device according to Claim 11, **characterised in that** the two rolling bearings (34a, 34b; 35a, 35b) of the pump (14) are mounted clamped axially against one another with an axial preload.

13. Device according to one of Claims 9 to 12, **characterised in that** the coolant may be corrosive, and **in that** each rolling bearing (34, 35) of the pump (14) comprises rolling elements (71a, 71b; 72a, 72b), of which at least the outer surfaces are formed of a material chosen from non-metallic, in particular ceramic, materials, and inoxidisable metallic materials.

14. Device according to one of Claims 9 to 13, **characterised in that** the parts of the pump (14) which are likely to come into contact with the coolant have a corrosion-resistant surface coating, in particular a chemical coating of metallic nickel.

15. Device according to one of Claims 9 to 14, **characterised in that** it is a device for thermal control of components (16) of a space system, such as a satellite or space station, the said circuit (13, 17) forming a two-phase coolant loop, the said components (16) forming a hot source which is outside the circuit (13, 17) and is associated with the latter by heat exchange means (15) for the purpose of their cooling.

## Patentansprüche

1. Thermisches Austauschverfahren vom Typ Zweiphasen, in dem:
- eine Kühlflüssigkeit mit einer niedrigeren Viskosität als die von Wasser verwendet wird, die geeignet ist, wenigstens teilweise im flüssigen Zustand und wenigstens teilweise im Dampfzustand vorhanden zu sein,
- die genannte Kühlflüssigkeit durch Pumpen in Verschiebung in einem Kreislauf (13, 17) angetrieben wird, der thermische Austauschmittel (15, 18) mit wenigstens einer kalten Quelle (19) und wenigstens einer warmen Quelle (16) außerhalb des Kreislaufs umfasst, wobei die genannte Kühlflüssigkeit beim Kontakt mit den genannten thermischen Austauschmitteln (15, 18) wenigstens teilweise den Zustand wechselt,
**dadurch gekennzeichnet, dass** Pumpmittel verwendet werden, die eine Rotorpumpe (14) umfassen, die Folgendes umfasst:
- ein Gehäuse (22),
- wenigstens zwei Ritzel (30, 31) mit externen geraden Zahnungen in verzahnter Zusammenwirkung miteinander, ohne Versatz,
- wobei jedes Ritzel (30, 31) fest verbunden an einer Welle (32, 33) montiert ist, die in Rotation geführt und im Verhältnis zum Gehäuse (2) durch Kugellager (34, 35) gefluchtet ist,
- wobei die Wellen (32, 33) der Ritzel parallel zueinander sind,
- Kopplungsmittel wenigstens einer der Wellen (32) der Ritzel an einem Antriebsmotor (20), der geeignet ist, um diesen in Rotation in einer niedrigeren Geschwindigkeit als 250 Umdrehungen pro Minute anzutreiben,
- in dem Gehäuse (22) eine Pump- (26) und Umlaufkammer der Kühlflüssigkeit, wobei diese Kammer (26) durch interne Wände begrenzt wird, die die Ritzel (30, 31) enthalten und wenigstens einen Einlasseingang (38) der Kühlflüssigkeit auf einer Seite des Eingreifens der Ritzel (30, 31) und wenigstens einen Verdrängungsausgang (39) der Kühlflüssigkeit auf der anderen Seite des Eingreifens der Ritzel (30, 31) umfassen,
- wobei radial und axial zwischen den internen Wänden der genannten Kammer (26) und den Ritzeln (30, 31) jeweils ein Spiel eingerichtet ist, wobei diese Spiele alle geringer sind als ein hundertstel Millimeter und im Betrieb mit Kühlflüssigkeit gefüllt sind.

2. Verfahren gemäß Anspruch 1, **dadurch gekennzeichnet, dass** die Rotorpumpe (14) in einer Rotationsgeschwindigkeit von weniger als 250 Umdrehungen pro Minute angetrieben wird.

3. Verfahren gemäß Anspruch 1 oder 2, **dadurch gekennzeichnet, dass** die genannte Kühlflüssigkeit Ammoniak ist, die Rotorpumpe (14) in einer Rotationsgeschwindigkeit angetrieben wird, die geeignet ist, dass die Rotorpumpe (14) einen Kühlflüssigkeitsdurchsatz liefert, der deutlich konstant zwischen 1 g/Sek. und 100 g/Sek. - insbesondere in der Größenordnung von 10 g/Sek. - inbegriffen ist.

4. Verfahren gemäß Anspruch 1 bis 3, **dadurch gekennzeichnet, dass** eine Pumpe (14) verwendet wird, in der jede Ritzelwelle (32, 33) im Verhältnis zum Gehäuse (22) ausschließlich durch Kugellager (34, 35) geführt ist, das mit einem einzigartigen Flansch (27) zusammenwirkt, der mit dem Gehäuse und mit einem Abschnitt der Welle (32, 33) fest verbunden ist, der sich auf einer einzigen Seite des Ritzels (30, 31) erstreckt.

5. Verfahren gemäß Anspruch 1 bis 4, **dadurch gekennzeichnet, dass** eine Pumpe (14) verwendet wird, in der jede Ritzelwelle (32, 33) im Verhältnis zum Gehäuse (22) durch zwei Kugellager (34a, 34b; 35a, 35b) geführt ist, die aneinander angrenzen.

6. Verfahren gemäß Anspruch 1 bis 5, **dadurch gekennzeichnet, dass** eine Pumpe (14) verwendet wird, in der die zwei Kugellager (34a, 34b; 35a, 35b) in schrägem Kontakt und axial gegeneinander mit einer axialen Vorlast gepresst montiert sind.

7. Verfahren gemäß Anspruch 1 bis 6, **dadurch gekennzeichnet, dass** die Kühlflüssigkeit geeignet ist, korrosiv zu sein und dass eine Pumpe (14) verwendet wird, in der jedes Kugellager (34, 35) rollende Elemente (71a, 71b; 72a, 72b) umfasst, von denen wenigstens die externen Flächen aus einem Material, das aus nicht metallischen Materialien ausgewählt ist - insbesondere Keramik - und aus rostfreien metallischen Materialien ausgewählt sind.

8. Verfahren gemäß Anspruch 1 bis 7, **dadurch gekennzeichnet, dass** eine Pumpe (14) verwendet wird, in der die Teile der Pumpe, die geeignet sind, mit der Kühlflüssigkeit in Kontakt zu kommen, aus einem korrosionsfesten und / oder einem Material gebildet werden, das eine korrosionsfeste Oberflächenbeschichtung aufweist - insbesondere eine chemische Nickel-Metallablagerung.

9. Thermische Austauschvorrichtung vom Typ Zweiphasen, die Folgendes umfasst:
- eine Kühlflüssigkeit mit einer niedrigeren Viskosität als der von Wasser, die geeignet ist, wenigstens teilweise in flüssigem Zustand und wenigstens teilweise in Dampfzustand vorhanden zu sein,
- Pumpenmittel der genannten Kühlflüssigkeit, die geeignet sind, sie in Verschiebung in einem Kreislauf (13, 17) anzutreiben, der thermische Austauschmittel (15, 18) mit wenigstens einer kalten Quelle (19) und wenigstens einer warmen Quelle (16) außerhalb des Kreislaufs umfasst, wobei die genannte Kühlflüssigkeit wenigstens teilweise beim Kontakt mit den genannten thermischen Austauschmitteln (15, 18) den Zustand ändert, **dadurch gekennzeichnet, dass** die genannten Pumpmittel eine Rotorpumpe (14) umfassen, die Folgendes umfasst:
- ein Gehäuse (22),
- wenigstens zwei Ritzel (30, 31) mit externen geraden Zahnungen in eingreifendem Zusammenwirken miteinander ohne Versatz,
- wobei jedes Ritzel (30, 31) fest mit einer Welle (32, 33) montiert ist, die in Rotation geführt und im Verhältnis zum Gehäuse (2) durch Kugellager (34, 35) gefluchtet ist,
- wobei die Wellen (32, 33) der Ritzel zueinander parallel sind,
- Kopplungsmittel wenigstens einer (32) der Ritzelwellen an einen Antriebsmotor (20), der geeignet ist, um diesen in Rotation in einer niedrigeren Geschwindigkeit als 250 Umdrehungen pro Minute anzutreiben,
- in dem Gehäuse (22) eine Pump- (26) und Umlaufkammer der Kühlflüssigkeit, wobei diese Kammer (26) durch interne Ritzel begrenzt ist, die die Ritzel (30, 31) enthalten, und wenigstens einen Einlasseingang (38) der Kühlflüssigkeit auf einer Seite des Eingreifens der Ritzel (30, 31) und wenigstens einen Verdrängungsausgang (39) der Kühlflüssigkeit auf der anderen Seite des Eingreifens der Ritzel (30, 31) umfassen,
- wobei radial und axial zwischen den internen Wänden der genannten Kammer (26) und den Ritzeln (30, 31) jeweils ein Spiel ausgespart ist wobei diese Spiele alle kleiner sind als ein hundertstel Millimeter und, in Betrieb mit Kühlflüssigkeit gefüllt sind.

10. Vorrichtung gemäß Anspruch 9, **dadurch gekennzeichnet, dass** jede Ritzelwelle (32, 33) der Pumpe (14) im Verhältnis zum Gehäuse (22) ausschließlich durch Kugellager (34, 35) geführt ist, die mit einem einzigartigen Flansch (27) zusammenwirken, der fest mit dem Gehäuse verbunden ist und mit einem Abschnitt der Welle (32, 33), die sich auf einer einzigen Seite des Ritzels (30, 31) erstreckt.

11. Vorrichtung gemäß Anspruch 10, **dadurch gekennzeichnet, dass** jede Ritzelwelle (32, 33) der Pumpe (14) im Verhältnis zum Gehäuse (22) durch zwei Kugellager (34a, 34b; 35a, 35b) geführt ist, die aneinander grenzen.

12. Vorrichtung gemäß Anspruch 11, **dadurch gekennzeichnet, dass** die zwei Kugellager (34a, 34b; 35a, 35b) der Pumpe (14) durch eine axiale Vorlast axial aneinander gepresst montiert sind.

13. Vorrichtung gemäß Anspruch 9 bis 12, **dadurch gekennzeichnet, dass** die Kühlflüssigkeit geeignet ist, korrosiv zu sein und dass jedes Kugellager (34, 35) der Pumpe (14) rollende Elemente (71a, 71b; 72a, 72b) umfasst, von denen wenigstens die externen Flächen aus einem Material ausgewählt sind, das aus nicht metallischen Materialien - insbesondere aus Keramik - und den rostfreien metallischen Materialien ausgewählt ist.

14. Vorrichtung gemäß Anspruch 9 bis 13, **dadurch gekennzeichnet, dass** die Teile der Pumpe (14), die geeignet sind, mit der Kühlflüssigkeit in Kontakt zu kommen, eine korrosionsfeste Oberflächenbeschichtung aufweisen - insbesondere eine chemische Nickel-Metallablagerung.

15. Vorrichtung gemäß Anspruch 9 bis 14, **dadurch gekennzeichnet, dass** es sich um eine thermische Kontrollvorrichtung von Komponenten (16) eines Raumfahrtsystems handelt, wie z. B. einem Satelliten oder einer Raumfahrtstation, wobei der genannte Kreislauf (13, 17) eine Schleife der Zweiphasen-Kühlflüssigkeit bildet, wobei die genannten Komponenten (16) eine warme Quelle außerhalb des Kreislaufs (13, 17) und letzterem durch thermische Austauschmittel (15) zum Zweck ihrer Kühlung zugeordnete Quelle bilden.
